# EUROPEAN PATENT APPLICATION

(11) **EP 4 672 273 A1**
(43) Date of publication of application: **31.12.2025**
(21) Application number: 24185379.5
(22) Date of filing: 28.06.2024
(51) Int. Cl.: H01B 3/44, C08L 23/04, H01B 9/02, C08L 25/06

(54) **POWER CABLE COMPRISING AN INSULATION LAYER**

(71) Applicant: NKT HV Cables AB, 371 60 Lyckeby (SE)
(72) Inventor: POURRAHIMI, Amir Masoud, Västerås (SE)
(74) Representative: Kransell & Wennborg KB

(57) **Abstract**

There is provided a power cable (1) comprising:
- a conductor (2) extending along a centre axis (C);
- an insulation system (5) including at least a first semiconducting layer (3) surrounding the conductor (2), and an insulation layer (4) surrounding the first semiconducting layer (3);
wherein the insulation layer (4) comprises:
a) 40-94 wt% LDPE; and
b) 6-60 wt% PS and/or styrene block copolymer,
wherein the weight percentages are based on the insulation layer (4) as a whole.

## Description

### TECHNICAL FIELD

The present disclosure generally relates to power cables.

### BACKGROUND

A typical power cable for medium and high voltage applications comprises a conductor surrounded by at least an inner semiconductive layer, an insulation layer and, optionally, an outer semiconductive layer, in that order. The power cables are typically produced by extruding the layers onto the conductor.

The polymer material in one or more of the layers of the power cable may be thermosetting, typically crosslinked, to improve e.g. heat and deformation resistance, creep properties, mechanical strength, chemical resistance and abrasion resistance. However, crosslinking the polymer material is associated with several drawbacks, e.g. the need for degassing volatile compounds during the production of the power cable and difficulties in recycling the power cable.

Thermoplastic polymer material offers several advantages compared to a thermosetting polymer material, such as omitted degassing step and increased recyclability. However, the absence of a crosslinked material can lead to impaired material properties of the power cable.

Thus, there is a need for power cables comprising polyolefin compositions which avoid the disadvantages associated with crosslinked material, but which also offer attractive material properties.

There is also a need for power cables having crosslinked polymer material with improved electrical properties.

### SUMMARY

A general object of the present disclosure is to provide a power cable that solves or at least mitigates the problems of the prior art.

According to a first aspect of the present disclosure, there is provided a power cable comprising:
- a conductor extending along a centre axis;
- an insulation system including at least a first semiconducting layer surrounding the conductor, and an insulation layer surrounding the first semiconducting layer;
wherein the insulation layer comprises:
a) 40-94 wt% LDPE; and
b) 6-60 wt% PS and/or styrene block copolymer,
wherein the weight percentages are based on the insulation layer as a whole.

Hereby, an advantageous insulation layer is provided. Thus, an improved power cable is provided. Owing to the polymer composition, an insulation layer with well-balanced material properties is provided. For example, the insulation layer according to the first aspect exhibits a combination of an advantageously low storage modulus at low temperatures (typically at 30 °C) and an advantageously high storage modulus at high temperatures (typically 120 °C). Thus, a well-balanced combination of flexibility at lower temperatures and creep resistance at higher temperature is provided. In particular, an advantageously high storage modulus at a temperature above 120 °C is provided. Moreover, without being bound to any theory, it is believed that the PS and/or styrene block copolymer forms an additional physical network within the LDPE which contributes to the advantageously high storage modulus at high temperatures. In addition, in case PS is provided in the insulation layer, the PS is increasing the dielectric strength due to that the PS acts as a voltage stabilizer in the LDPE. According to one embodiment, the expression "6-60 wt% PS and/or styrene block copolymer" refers to that the combined amount of PS and styrene block copolymer in the insulation layer. According to one embodiment, the expression "6-60 wt% PS and/or styrene block copolymer" refers to amount of PS in the insulation layer (i.e. regardless of the amount of styrene block copolymer in the insulation layer, if any). According to one embodiment, the expression "6-60 wt% PS and/or styrene block copolymer" refers to amount of styrene block copolymer in the insulation layer (i.e. regardless of the amount of PS in the insulation layer, if any).

Storage modulus is a measure of the stored energy in a material during deformation, representing the elastic, or recoverable, portion of the material's response in dynamic mechanical analysis, DMA. It reflects the material's ability to store energy and return to its original shape after deformation. The storage modulus is a dynamic property specific to viscoelastic materials, e.g. the insulation layer of the present disclosure, and is measured under dynamic, oscillatory, conditions, wherein it is dependent on the frequency of the applied load. The storage modulus indicates how much energy is stored in the material and is recoverable during each deformation cycle.

It should be noted that the LDPE referred to herein is a low density polyethylene, typically a homopolymer of ethylene (LDPE homopolymer). The LDPE may e.g. have a density between 915 and 940 kg/m³, or between 917 and 930 kg/m³. Density is measured according to ISO 1183-1:2019.

It should be noted that the PS referred to herein is polystyrene.

According to one embodiment, the insulation layer comprises a) 40-90 wt% LDPE, such as 40-85 wt% LDPE, such as 40-75 wt% LDPE; and b) 10-60 wt%, such as 15-60 wt%, such as 25-60 wt% PS and/or styrene block copolymer, wherein the weight percentages are based on the insulation layer as a whole. Hereby, the above mentioned improved material properties related to the storage modulus at low and/or high temperatures may be further improved.

According to one embodiment, the insulation layer is not crosslinked. Accordingly, the insulation layer is thermoplastic and the insulation layer does not comprise peroxide, or crosslinking residues. For example, the insulation layer comprises: a) 40-94 wt% LDPE; and b) 6-60 wt% PS and/or styrene block copolymer, wherein the weight percentages are based on the insulation layer as a whole, and the insulation layer is not crosslinked.

For example, the insulation layer is not crosslinked and comprises: a) 40-75 wt% LDPE, such as 40-70 wt% LDPE, and b) 25-60 wt% styrene block copolymer, such as 30-60 wt% styrene block copolymer, wherein the weight percentages are based on the insulation layer as a whole. Preferably, in such embodiment, the LDPE and styrene block copolymer constitutes at least 90 wt% of the insulation layer, such as at least 95 wt% of the insulation layer, such as at least 97 wt% of the insulation layer, based on the weight of the insulation layer as a whole.

According to one embodiment, the whole insulation system is thermoplastic and is not crosslinked. Hereby, not only the insulation layer, but also the whole insulation layer is not crosslinked and may benefit from associated advantages (e.g. no degassing during the production of the insulation layer or insulation system, increased recyclability etcetera). It should be noted that any layer of the power cable, such as e.g. the inner semiconductive layer, may additionally be thermoplastic. The first semiconducting layer typically comprises an electrically conductive compound, such as e.g. carbon black.

According to one embodiment, the LDPE and PS and/or styrene block copolymer constitutes at least 90 wt% of the insulation layer, such as at least 95 wt% of the insulation layer, such as at least 97 wt% of the insulation layer, based on the weight of the insulation layer as a whole.

According to one embodiment, the insulation layer, or the composition used for obtaining the insulation layer, comprises at most 3 wt% of one or more additives, such as antioxidant(s), stabilizer(s), processing aid(s), inorganic filler(s), the weight percentage being based on the insulation as a whole, or based on the composition as a whole.

According to an alternative embodiment, the insulation layer has been crosslinked, preferably by using peroxide as crosslinking agent. Accordingly, the LDPE is crosslinked into crosslinked polyethylene, XLPE. Hereby, an advantageous insulation layer is provided. Thus, an improved power cable is provided. Owing to the composition of the insulation layer, and in particular the polymer combination of XLPE and PS and/or styrene block copolymer and its relative amount in the insulation layer, an insulation layer with improved material properties is provided. In particular, the insulation layer according to the second aspect may exhibit an advantageously high storage modulus at high temperatures (typically 120 °C). Without being bound by any theory, it is believed that the PS and/or styrene block copolymer forms an additional physical network within the XLPE which contributes to the advantageously high storage modulus at high temperatures. Moreover, by the addition of the PS and/or styrene block copolymer to the XLPE, less crosslinking agent, such as peroxide, may be used for achieving corresponding material properties as compared to a corresponding insulation layer with no, or a different amount of, PS and/or styrene block copolymer. For example, the insulation layer comprises: a) 50-94 wt%, such as 50-85 wt%, such as 50-80 wt% XLPE; and b) 6-50 wt%, such as 15-50 wt%, such as 20-50 wt% PS and/or styrene block copolymer, wherein the weight percentages are based on the insulation layer as a whole.

It should be noted that the XLPE referred to herein is a low density polyethylene, typically a homopolymer of ethylene (LDPE homopolymer), which is crosslinked (i.e. has been crosslinked by using a crosslinking agent). The LDPE used for the XLPE may e.g. have a density between 915 and 940 kg/m³, or between 917 and 930 kg/m³. Density is measured according to ISO 1183-1:2019. Thus, LDPE being crosslinked is synonymous to XLPE. It may also be referred to as LDPE with crosslinking agent, e.g. LDPE and peroxide or LDPE and DCP. For example, the composition used for producing the XLPE may comprise 1 wt% peroxide (e.g. DCP).

According to one embodiment, the power cable is a medium voltage or high voltage power cable.

According to one embodiment, the insulation layer is an extruded, such as co-extruded, insulation layer. For example, the insulation layer may have been extruded onto the first semiconducting layer. Alternatively, the insulation layer may have been co-extruded together with the first semiconducting layer.

According to one embodiment, the insulation layer has a storage modulus of between 250 and 550 MPa when measured at 30 °C, such as between 300 and 500 MPa using the DMA Storage modulus method as defined herein. According to one embodiment, the insulation layer exhibit a storage modulus of between 0.1-1 MPa when measured at 120 °C, such as between 0.2-1 MPa using the DMA Storage modulus method as defined herein. Thus, the insulation layer may exhibit an advantageously low storage modulus ("flexibility") at low temperatures (at 30 °C) and an advantageously high storage modulus ("creep resistance") at high temperatures (at 120 °C).

According to one embodiment, the insulation layer comprises PS and styrene block copolymer in contents of: a) 3-50 wt% PS, such as 10-50 wt% PS, such as 20-50 wt% PS, such as 25-45 wt% PS, and b) 3-15 wt% styrene block copolymer, wherein the weight percentages are based on the insulation layer as a whole. Thus, the insulation layer may exhibit an advantageously low storage modulus ("flexibility") at low temperatures (at 30 °C). Thus, the insulation layer may also exhibit an advantageously high storage modulus at high temperatures (at about 120 °C). Typically, high storage modulus result in high creep-resistance.

According to an alternative embodiment, the insulation layer comprises PS or styrene block copolymer in contents of: a) 6-50 wt% PS, such as 10-50 wt% PS, such as 15-40 wt% PS, or b) 25-60 wt% styrene block copolymer, such as 30-60 wt% styrene block copolymer wherein the weight percentages are based on the insulation layer as a whole.

According to one embodiment, the styrene block copolymer is selected from the group consisting of SEBS, SEPS, SBS and SIS. For example, SEBS being Styrene-Ethylene-Butylene-Styrene, may be poly[styrene-b-(ethylene-co-butylene)-b-styrene], SEPS being Styrene-Ethylene-Propylene-Styrene, may be poly[styrene-b-(ethylene-co- propylene)-b-styrene], SBS being Styrene-Butadiene-Styrene, may be poly[styrene-b-(butadiene)-b-styrene] and SIS being Styrene-Isoprene-Styrene, may be poly[styrene-b-(isoprene)-b-styrene]. For example, the styrene block copolymer may be a mixture of at least any two of SEBS, SEPS, SBS and SIS.

The styrene block copolymer may have a styrene content of 10 to 40 wt%, preferably between 13 and 35 wt%. Thus, the styrene content of the styrene block copolymer may be equal to or below 40 wt%, preferably of equal to or below 35 wt%, and may be equal to or above 10 wt%, preferably equal or to above 13 wt%. Such styrene content is beneficial for provision of a high creep resistance.

The styrene block copolymer may have a density of between 900 kg/m3 and 1200 kg/m³, preferably between 950 kg/m³ and 1150 kg/m³. Density is measured according to ISO 1183-1:2019.

The styrene block copolymer may have a specific gravity of between 0.80-1.20 g/cm³, preferably between 0.85-1.10 g/cm³. Specific gravity is measured according to ASTM D2240.

The styrene block copolymer may have a melt flow index of 1-25 g/10 min tested at 230°C and 2.16 kg. Melt flow index is measured according to ASTM D1238.

The styrene block copolymer may be prepared by any suitable known method in the art or can be obtained commercially.

According to one embodiment, the power cable further comprises a second semiconducting layer. For example, the first semiconducting layer may be an inner semiconducting layer arranged in direct contact with, and radially inside of, the insulation layer, and the second semiconducting layer may be an outer semiconducting layer arranged radially outside of the insulation layer.

According to one embodiment, the second semiconducting layer is comprised in the insulation system. The second semiconducting layer may be arranged in direct contact with, and radially outside of, the insulation layer. The second semiconducting layer may form an insulation screen. The first semiconducting layer may form a semiconducting conductor shield. The first semiconducting layer may be arranged closest to the conductor (i.e. closest with regards to the insulation system).

According to one preferred embodiment, the insulation layer comprises: a) 40-75 wt% LDPE and b) 25-60 wt% styrene block copolymer, wherein the weight percentages are based on the insulation layer as a whole. Such embodiment provides for a beneficially high storage modulus at high temperature (above 120 °C). Thereby, an insulation based on such composition is considered to have a high creep-resistance.

According to another particularly preferred embodiment, the insulation layer comprises: a) 40-94 wt%, such as 40-85 wt%, such as 40-75 wt% LDPE; and 6-60 wt%, such as 15-60 wt%, such as 25-60 wt% PS, wherein the weight percentages are based on the insulation layer as a whole. For example, the insulation layer comprises: a) 40-94 wt% LDPE and b) 6-60 wt% PS, or the insulation layer comprises a) 40-85 wt% LDPE and b) 15-60 wt% PS, or the insulation layer comprises a) 40-75 wt% LDPE and b) 25-60 wt% PS. In particular the embodiment wherein the insulation layer comprises a) 40-75 wt% LDPE and b) 25-60 wt% PS provides for a beneficially low storage modulus at low temperature (at 30 °C) in combination with a high storage modulus at high temperature (at 120 °C) also in combination with beneficial dielectric strength.

According to yet another particularly preferred embodiment, the insulation layer comprises: a) 3-50 wt%, such as 10-50 wt%, such as 20-50 wt% PS, such as 25-45 wt% PS, and 3-15 wt% styrene block copolymer and 40-94 wt% LDPE, wherein the weight percentages are based on the insulation layer as a whole. For example, the insulation layer comprises: a) 20-50 wt% PS and b) 3-15 wt% styrene block copolymer and 40-94 wt% LDPE or the insulation layer comprises: a) 25-45 wt% PS and b) 3-15 wt% styrene block copolymer and 40-94 wt% LDPE. Such embodiment provides for a beneficially low storage modulus at low temperature (at 30 °C) in combination with a high storage modulus at high temperature (at 120 °C) also in combination with beneficial dielectric strength.

According to another particularly preferred embodiment, the insulation layer comprises: a) 40-94 wt%, such as 50-85 wt% XLPE, such as 50-80 wt% XLPE; and b) 3-50 wt%, such as 10-50 wt%, such as 20-50 wt% PS, and c) 3-15 wt% styrene block copolymer, wherein the weight percentages are based on the insulation layer as a whole. For example, the insulation layer comprises: a) 40-94 wt% XLPE and b) 3-50 wt% PS and c) 3-50 wt% styrene block copolymer, or the insulation layer comprises a) 50-85 wt% XLPE and b) 10-50 wt% PS and c) 3-15 wt% styrene block copolymer, or the insulation comprises: a) 50-80 wt% XLPE and b) 20-50 wt% PS and c) 3-15 wt% styrene block copolymer. Such embodiments provide for a beneficially low storage modulus at low temperature (at 30 °C) in combination with a high storage modulus at high temperature (at 120 °C) also in combination with beneficial dielectric strength.

According to a second aspect of the present disclosure, there is provided a process for producing a power cable comprising the steps of: providing a conductor; applying an insulation system surrounding the conductor, wherein the insulation system includes at least a first semiconducting layer and an insulation layer surrounding the first semiconducting layer; wherein the insulation layer comprises: a) 40-94 wt% LDPE; and b) 6-60 wt% PS and/or styrene block copolymer, wherein the weight percentages are based on the insulation layer as a whole.

According to one embodiment, the insulation system is applied by extrusion, such as co-extrusion. For example, the insulation layer may be extruded onto the first semiconducting layer. Alternatively, the insulation layer may be co-extruded together with the first semiconducting layer.

According to one embodiment, the extruded insulation layer has been produced by compounding and subsequent extrusion, and optionally cross-linking after the extrusion. Thus, the insulation layer may have been obtained from a composition comprising: a) 40-94 wt% LDPE; and b) 6-60 wt% PS and/or styrene block copolymer, wherein the weight percentages are based on the insulation layer as a whole. In case of crosslinking, the LDPE with PS and/or styrene block copolymer are typically pre-compounded. After extrusion, this compound is preferably soaked in a crosslinking agent as an additional step. The compounding is typically conducted at an elevated temperature where a crosslinking agent, if added to the composition from the beginning, may start to react and crosslink.

The examples and embodiments discussed above in connection to the first aspect apply to the second aspect *mutatis mutandis.*

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig. 1 schematically shows a radial cross section of a power cable of an example embodiment;
Fig. 2 schematically shows a side view of at least a part of the power cable of Fig. 1; and
Fig. 3 schematically shows a radial cross section of a power cable of an example embodiment;
Fig. 4 schematically shows a side view of at least a part of the power cable of Fig. 2; and
Fig. 5 is a flow-chart showing the steps of a process for producing a power cable according to at least some example embodiments;
Fig. 6 is a graph showing the Dynamic Mechanical Analysis (DMA) storage modulus (E') plotted on a logarithmic scale against temperature for various comparative and inventive example samples;
Fig. 7 is a graph showing the DMA storage modulus plotted on a logarithmic scale against temperature for various comparative and inventive example samples;
Fig. 8 is a graph showing the DMA storage modulus plotted on a logarithmic scale against temperature for various comparative and inventive example samples; and
Fig. 9 is a graph showing the DMA storage modulus plotted on a logarithmic scale against temperature for various comparative and inventive example samples.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

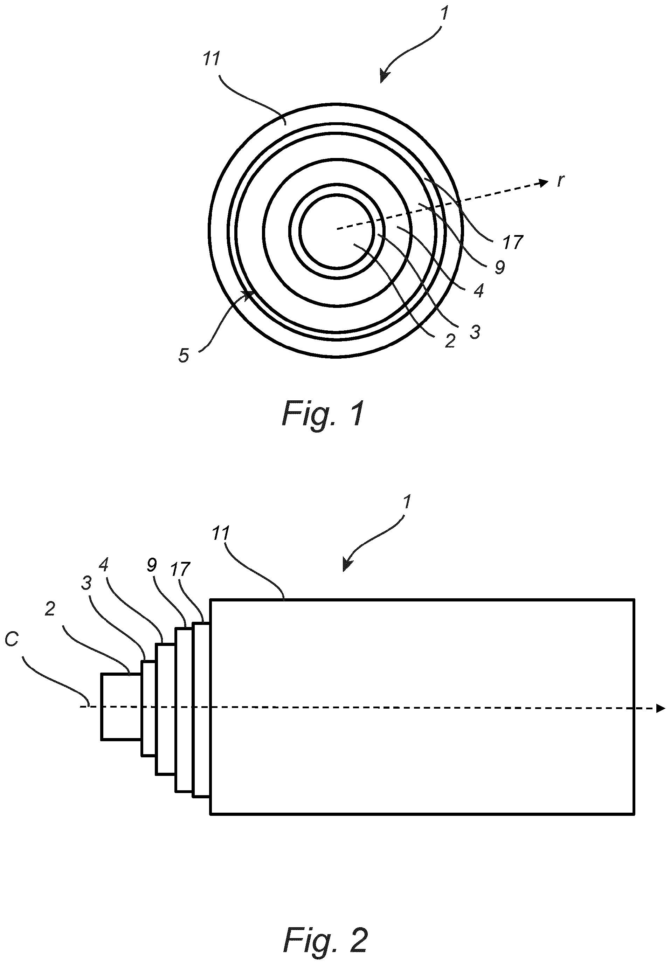

Figs. 1 and 2 show an example of a power cable 1. The power cable 1 is in this example a single power core power cable. However, it should be mentioned that the power cable could comprise several identical power cores to form a multi-core power cable, such as three-phase power cable. The power cable 1 may be a HVDC power cable or a HVAC power cable, for example for voltages higher than 35 kV, or higher than 110 kV, or higher than 450 kV, or higher than 550 kV, or higher than 800 kV. The power cable 1 may alternative be a medium power cable (DC or AC), for example for voltages between 5 kV and 35 kV. However, according to one alternative embodiment, the power cable 1 is a medium power cable (or high voltage cable in the medium voltage span) for voltages between 1 kV and 35 kV.

In Fig. 1, a radial cross section of an embodiment of a power cable 1 is shown. The radial cross section is a cross section in the radial direction r of the power cable 1, i.e. a plane perpendicular to a centre axis of the power cable 1 (extending into the paper). The power cable 1 may e.g. be defined by cylindrical coordinates (by a radial distance r, azimuth φ which is the angle along the circumferential direction, and an axial coordinated along the longitudinal axis).

In Fig. 2, a side view of the power cable 1 of Fig. 1, in which the power cable 1 extends along the centre axis C (or centre longitudinal axis).

In the following, the power cable 1 will be described with reference to both Figs. 1 and 2. The power cable 1 comprises a conductor 2 extending along the centre axis C. The conductor 2 may for example be stranded, segmental of Milliken type, solid, or a profile wire conductor. The conductor 2 may for example comprise copper or aluminum.

The power cable 1 further comprises an insulation system 5 provided around, and covering, the conductor 2. The insulation system 5 comprises a first semiconducting layer 3 provided around the conductor 2, an insulation layer 4 provided around the first semiconducting layer 3, and optionally, a second semiconducting layer 9 provided around the insulation layer 4.

In the embodiment of Figs. 1 and 2, the insulation layer 4 is arranged to be in direct contact with, and radially outside of the first semiconducting layer 3. Moreover, the optional second semiconducting layer 9 is arranged to be in direct contact with, and radially outside of, the insulation layer 4. Thus, the first semiconducting layer 3 may form a semiconducting conductor shield and be referred to as an inner semiconducting layer. The optional second semiconducting layer 9 may form an insulation screen and be referred to as an outer semiconducting layer.

In the embodiment of Figs. 1 and 2, the power cable 1 further comprises a water barrier structure 17 surrounding the insulation system 5. Thus, in the embodiment of Fig. 1, the water barrier structure 17 is in direct contact with the insulation system 5. In the example, the water barrier structure 17 is arranged in direct contact with, and radially outside of, the optional second semiconducting layer 9. The water barrier structure 17 is typically arranged to prevent, or at least greatly reduce, water penetrating into the insulation system 5 from the outside. The water barrier structure may e.g. exhibit a water permeability of below 0.1 g / (m²*24 h) or below 0.05 9 / (m²*24 h). The water barrier structure may e.g. be a tape wrapped around the insulation system 5, and/or may comprise a metallic foil.

The power cable 1 may furthermore comprise a polymeric jacket 11 provided around the insulation system 5. In the embodiment of Figs. 1 and 2, the polymeric jacket is arranged in direct contact with, and radially outside of, the water barrier structure 17. Thus, the water barrier structure 17 is arranged in between the insulation system 5 and the polymeric jacket 11. However it should be noted that the polymeric jacket 11 may be arranged in direct contact with, and radially outside of, the insulation system 5, in case the water barrier structure 17 is omitted.

The polymeric jacket 11 may e.g. comprise a polymeric material that is extruded around the water barrier structure 17 and/or the insulation system 5. The polymeric jacket 11 of the embodiment of Figs. 1 and may be wholly or partly water impermeable.

The insulation system 5 may be extruded and comprise thermosetting and/or thermoplastic polymer material. For example, the layers 3, 4, 9 of the insulation system 5 may be different in the aspect of being made of thermosetting and thermoplastic polymer material. However, at least the insulation layer 4 is made of thermoplastic polymer material and is hence not crosslinked. Thus, the insulation layer 4 typically does not comprise peroxide or other crosslinking agents or crosslinking residues. Typically, the insulations system 5 is not crosslinked. The first semiconducting layer 3, and the optional second semiconducting layer 9, typically comprises an electrically conductive compound, e.g. carbon black.

The insulation layer 4 comprises a) LDPE and b) PS and/or styrene block copolymer. The insulation layer may further comprise c) one or more additives. The one or more additives may include antioxidant(s), stabilizer(s), processing aid(s) and inorganic filler(s). According to one embodiment, the insulation layer 4 consists of a) LDPE and b) PS and/or styrene block copolymer and optionally c) one or more additives.

For example, the insulation layer 4 comprises a) 40-94 wt% LDPE, b) 6-60 wt% PS and/or styrene block copolymer, optionally together with 0 to 3 wt% one or more additives. The weight percentages are based on the insulation layer 4 as a whole. For example, the insulation layer comprises a) 40-90 wt% LDPE, such as 40-85 wt% LDPE, such as 40-75 wt% LDPE, such as 40-70 wt% LDPE; and b) 10-60 wt%, such as 15-60 wt%, such as 25-60 wt%, such as 30-60 wt% PS and/or styrene block copolymer, and optionally together with 0 to 3 wt% one or more additives. For example, the LDPE and PS and/or styrene block copolymer constitutes at least 90 wt% of the insulation layer, such as at least 95 wt% of the insulation layer, such as at least 97 wt% of the insulation layer, based on the weight of the insulation layer as a whole.

The LDPE referred to herein is a low density polyethylene, typically a homopolymer of ethylene (LDPE homopolymer). The LDPE may e.g. have a density between 915 and 940 kg/m³, or between 917 and 930 kg/m³. Density is measured according to ISO 1183-1:2019.

As will be shown in the examples later, but which is briefly mentioned here, the insulation layer 4 has advantageous material properties, such as an advantageously high storage modulus at high temperatures (typically 120 °C).

It is believed that the PS and/or styrene block copolymer forms an additional physical network within the LDPE which contributes to the advantageously high storage modulus at high temperatures as well as increasing the dielectric strength due to that the PS acts as voltage stabilizers the LDPE. Moreover, the insulation layer 4 may exhibit a combination of an advantageously low storage modules at low temperatures (typically at 30 °C) and an advantageously high storage modulus at high temperatures, i.e. a well-balanced combination of flexibility at lower temperatures and creep resistance at higher temperatures. For example, the insulation layer 4 has a storage modulus of between 250 and 550 MPa when measured at 30 °C, such as between 300 and 500 MPa using the DMA Storage modulus method as defined herein. Additionally or alternatively, the insulation layer exhibit a storage modulus of between 0.1-1 MPa when measured at 120 °C, such as between 0.2-1 MPa using the DMA Storage modulus method as defined herein.

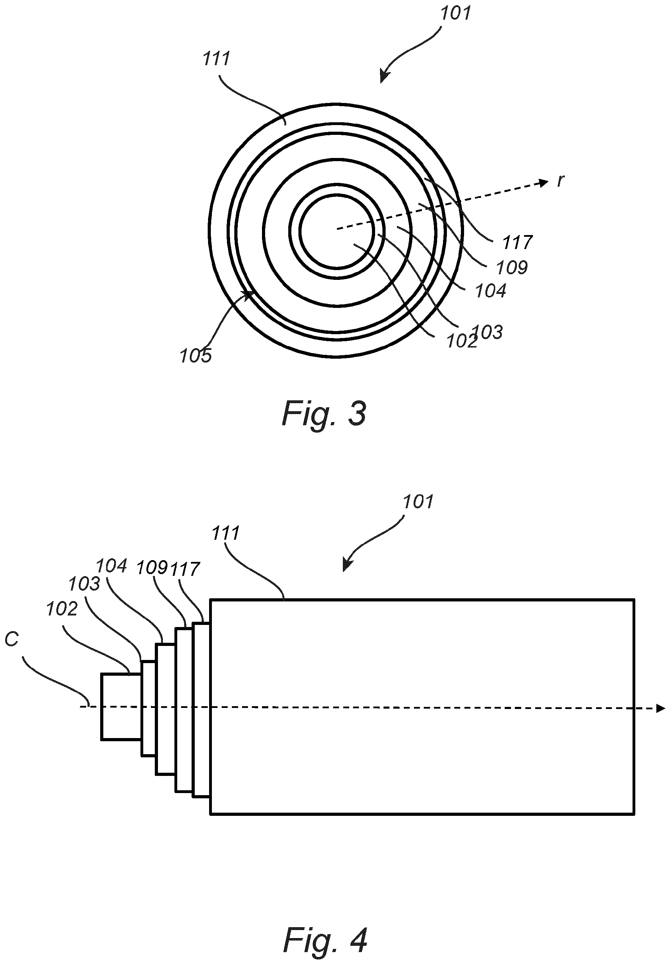

Turning to Figs. 3 and 4 showing another example of a power cable 101. The power cable 101 is in this example a single power core power cable as that described with reference to Figs. 1 and 2. However, it should be mentioned that the power cable could comprise several identical power cores to form a multi-core power cable, such as three-phase power cable. The power cable 101 in Figs. 3 and 4 are in large corresponding to the power cable 1 of Figs. 1 and 4, why mainly the differences between the power cables 1, 101 are described in the following. Like number are used for like references, but with an additional value of "100" for each feature, i.e. "power cable 1" of Figs. 1 and 2 relates to "power cable 101" of Figs 3 and 4.

In Fig. 3, a radial cross section of an embodiment of a power cable 101 is shown, and in Fig. 4, a side view of the power cable 101 of Fig. 3, in which the power cable 101 extends along the centre axis C (or centre longitudinal axis) is shown. In the following, the power cable 101 will be described with reference to both Figs. 3 and 4. The power cable 101 comprises a conductor 102 extending along the centre axis C, an insulation system 105 provided around, and covering, the conductor 102, a water barrier structure 117 surrounding the insulation system 105 and a polymeric jacket 11 provided around the insulation system 105 (which in the examples of Figs. 3 and 4 also includes being provided around the water barrier structure 17). All layers, except for the insulation system 105 may be corresponding, or be the same, as the corresponding layers of the insulation system 5 of Figs. 1-2.

The insulation system 105 comprises a first semiconducting layer 103 provided around the conductor 102, an insulation layer 104 provided around the first semiconducting layer 103, and optionally, a second semiconducting layer 109 provided around the insulation layer 104, in a corresponding structure as for the power cable 1 of Figs. 1 and 2.

The insulation system 105 maybe extruded and comprise thermosetting and/or thermoplastic polymer material. For example, the layers 103, 104, 109 of the insulation system 105 may be different in the aspect of being made of thermosetting and thermoplastic polymer material. However, at least the insulation layer 104 is made of thermosetting polymer material and is hence crosslinked. Thus, the insulation layer 104 typically comprises peroxide or other crosslinking agents or crosslinking residues. Typically, the insulation system 105 is crosslinked. The first semiconducting layer 103, and the optional second semiconducting layer 109, typically comprises an electrically conductive compound, e.g. carbon black.

The insulation layer 104 comprises a) XLPE and b) PS and/or styrene block copolymer. The insulation layer may further comprise c) one or more additives. The one or more additives may include antioxidant(s), stabilizer(s), processing aid(s) and inorganic filler(s). According to one embodiment, the insulation layer 104 consists of a) LDPE and b) PS and/or styrene block copolymer and optionally c) one or more additives.
For example, the insulation layer 104 comprises 40-94 wt% XLPE, b) 6-60 wt% PS and/or styrene block copolymer, optionally together with 0 to 3 wt% one or more additives. The weight percentages are based on the insulation layer 104 as a whole. For example, the insulation layer 104 comprises 50-94 wt%, such as 50-85 wt%, such as 50-80 wt% XLPE, and b) 6-50 wt%, such as 15-50 wt%, such as 20-50 wt% PS and/or styrene block copolymer, and optionally together with 0 to 3 wt% of one or more additives. For example, the XLPE and PS and/or styrene block copolymer constitutes at least 90 wt% of the insulation layer 104, such as at least 95 wt% of the insulation layer 104, such as at least 97 wt% of the insulation layer 104, based on the weight of the insulation layer as a whole.

The XLPE referred to herein is a low density polyethylene, typically a homopolymer of ethylene (LDPE homopolymer), which is crosslinked (i.e. has been crosslinked by using a crosslinking agent). The LDPE used for the XLPE may e.g. have a density between 915 and 940 kg/m³, or between 917 and 930 kg/m³. Density is measured according to ISO 1183-1:2019.

As will be shown in the examples later, but which is briefly mentioned here, the insulation layer 104 has advantageous material properties, such as an advantageously high storage modulus at high temperatures (typically 120 °C). Without being bound by any theory, it is believed that the PS and/or styrene block copolymer forms an additional physical network within the XLPE which contributes to the advantageously high storage modulus at high temperatures. Moreover, by the addition of the PS and/or styrene block copolymer to the XLPE, less crosslinking agent, such as peroxide, may be used for achieving corresponding material properties as compared to a corresponding insulation layer with no, or a different amount of, PS and/or styrene block copolymer. For example, the insulation layer exhibit a storage modulus of between 250 and 550 MPa when measured at 30 °C, such as between 300 and 500 MPa using the DMA Storage modulus method as defined herein. Additionally or alternatively, the insulation layer exhibit a storage modulus of between 0.1-1 MPa when measured at 120 °C, such as between 0.2-1 MPa using the DMA Storage modulus method as defined herein.

Each one of the insulation layers 4, 104 is, as previously mentioned, preferably an extruded insulation layer, i.e. has been produced by extrusion, such as co-extrusion. Preferably, the extruded insulation layer has been produced by compounding the LDPE, PS and/or styrene block followed by addition of crosslinker to yield XLPE.

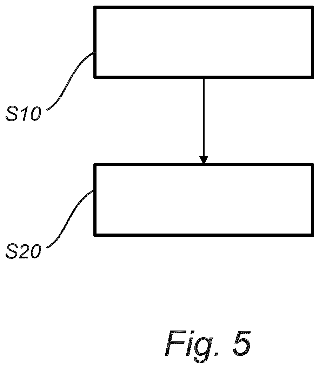

Fig. 5 is a flow-chart describing a process for producing a power cable according to at least some examples. The power cable is for example that of Figs. 1 and 2, or that of Figs. 3 and 4. Thus, in the following, reference is made to both power cable 1 and power cable 101.

In a first step S10, a conductor 2, 102 is provided. The conductor 2, 102 may for example be stranded, segmental of Milliken type, solid, or a profile wire conductor, and/or comprise copper or aluminum.

In a second step S20, being subsequent to the first step S10, an insulation system 5, 105 is applied to surround the conductor 2, 102. The insulation system includes at least a first semiconducting layer 3, 103 and an insulation layer 4, 104 surrounding the first semiconducting layer 3, 103. The insulation system 5, 105 may e.g. be applied to surround the conductor 2, 102 by extrusion, or co-extrusion. For example, at least two of the layers of the insulation system 5, 105 is co-extruded onto the conductor 2, 120.

### EXAMPLES

In the following, various samples were prepared and analyzed by specific material parameters. Each sample correspond to a previously described insulation layer.

### Example 1

LDPE (LD 101BA from ExxonMobil) was compounded with PS (430102 from Sigma-Aldrich). A sample containing only LDPE was also prepared and used as reference. The samples were produced by melt compounding at 200 °C, 50 rpm for 6 minutes, using a microcompounder (HAAKE^{™} MiniCTW Micro-Conical Twin Screw Compounder). No crosslinking agent was added.

The various samples are summarized in Table 1 below.

**Table 1. Compositions of the various samples in Example 1.**

| | CE1 | CE2 | CE3 | IE1 | IE2 |
|---|---|---|---|---|---|
| | LDPE | PS:LDPE (1:99) | PS:LDPE (5:95) | PS:LDPE (10:90) | PS:LDPE (30:70) |
| PS wt% | 0 | 1 | 5 | 10 | 30 |
| LDPE wt% | 100 | 99 | 95 | 90 | 70 |

| | | | | | |
|---|---|---|---|---|---|
| CE: Comparative Example; IE: Inventive Example | | | | | |

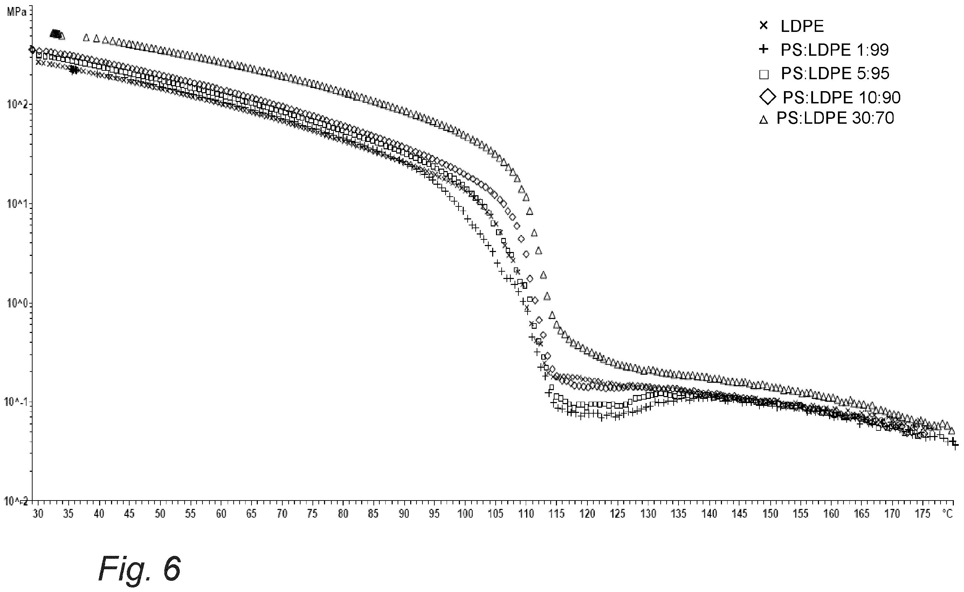

With reference to Fig. 6, the DMA storage modulus is shown on a logarithmic scale (Log storage modulus vs sample temperature) for the samples of Table 1. As is shown in Fig. 6, IE1 & IE2 exhibits improved storage modulus at high temperatures (about 120 °C) compared with CE1, CE2, and CE3. Moreover, as compared to CE1, IE1 & IE2 exhibits improved storage modulus at low temperatures (about 30 °C), almost in parity with CE2 and CE3. Thus, IE1 & IE2 exhibit a well-balanced combination of flexibility at lower temperatures and creep resistance at higher temperature. Moreover, for IE2, i.e. at a PS content of about 30 wt%, there is a significant improvement of the storage modulus at high temperature. Thus, it is reasonable to assume that for a PS content of above 10 wt%, such as e.g. at, or above 15 wt%, the major improvement with regards to the storage modulus at high temperatures is present.

### Example 2

Samples containing the LDPE mixed with SEBS (G1650 from Kraton) were prepared, wherein the SEBS was a linear triblock copolymer based on styrene and ethylene/butylene, S-E/B-S, with bound styrene of 29.2 wt%. The samples were produced by melt compounding at 180 °C, 50 rpm for 6 minutes, using a microcompounder (HAAKE^{™} MiniCTW Micro-Conical Twin Screw Compounder). No crosslinking agent was added.

The various samples are summarized in Table 2 below.

**Table 2. Compositions of the various samples in Example 2.**

| | CE4 | CE5 | CE6 | IE3 |
|---|---|---|---|---|
| | SEBS:LDPE (5^{:}95) | SEBS:LDPE (10:90) | SEBS:LDPE (20:80) | SEBS:LDPE (50:50) |
| SEBS wt% | 5 | 10 | 20 | 50 |
| LDPE wt% | 95 | 90 | 80 | 50 |

| | | | | |
|---|---|---|---|---|
| CE: Comparative Example; IE: Inventive Example | | | | |

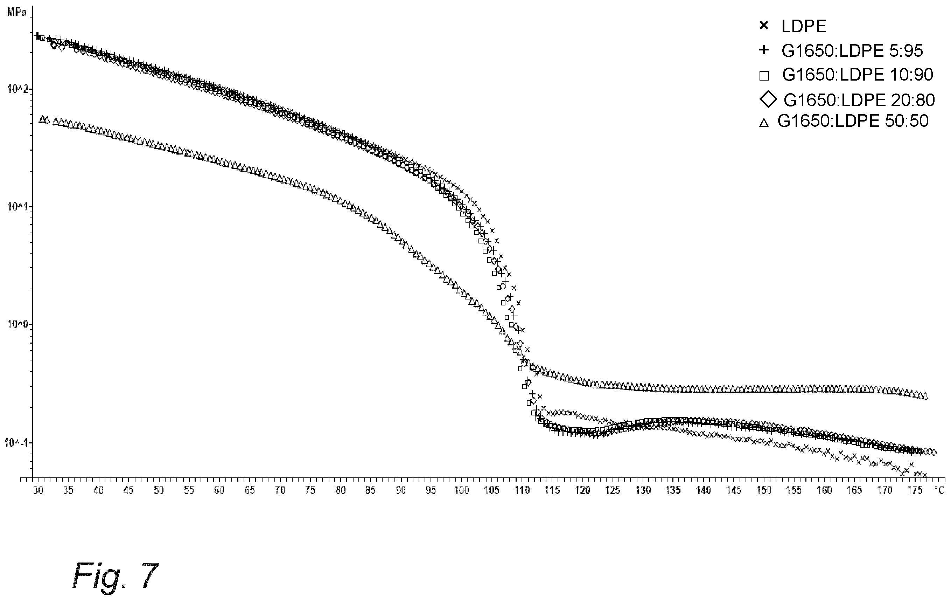

With reference to Fig. 7, the DMA storage modulus is shown on a logarithmic scale (Log storage modulus vs sample temperature) for the samples of Table 2 as well as CE1. As is shown in Fig. 7, IE3 exhibits an improved storage modulus at high temperatures (about 120 °C) compared with CE1, CE4, CE5 and CE6. Moreover, as compared to CE1, CE4 and CE5, IE3 exhibits a lower storage modulus at low temperatures (about 30 °C). Thus, IE1 & IE2 exhibit a well-balanced combination of flexibility at lower temperatures and creep resistance at higher temperature. Moreover, for IE3, i.e. at a SEBS content of about 50 wt%, there is a significant improvement of the storage modulus at high temperature. Thus, it is reasonable to assume that for a SEBS content of above 20 wt%, such as e.g. at, or above 25 wt%, the major improvement with regards to the storage modulus at high and low temperatures is present.

### Example 3

Samples containing the LDPE, PS and SEBS were also prepared. The samples were produced by melt compounding at 200 °C, 50 rpm for 6 minutes, using a microcompounder (HAAKE^{™} MiniCTW Micro-Conical Twin Screw Compounder). No crosslinking agent was added.

The various samples are summarized in Table 3 below.

**Table 3. Compositions of the various samples in Example 3.**

| | IE4 | IE5 | IE6 | IE7 |
|---|---|---|---|---|
| | SEBS:PS:LDPE (5:5:90) | SEBS:PS:LDPE (5:10:85) | SEBS:PS:LDPE (5:20:75) | SEBS:PS:LDPE (5:30:65) |
| SEBS wt% | 5 | 5 | 5 | 5 |
| PS wt% | 5 | 10 | 20 | 30 |
| LDPE wt% | 90 | 85 | 75 | 65 |

| | | | | |
|---|---|---|---|---|
| CE: Comparative Example; IE: Inventive Example | | | | |

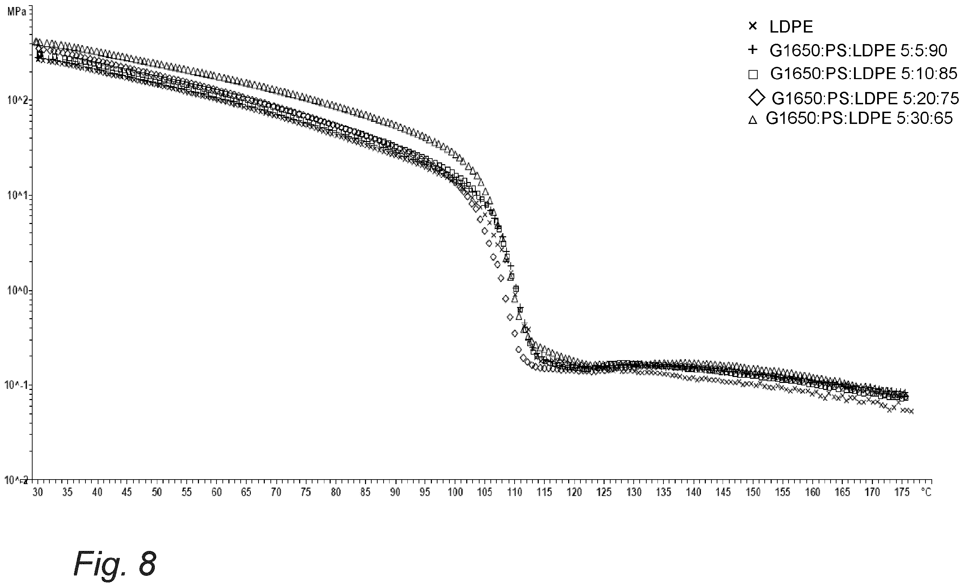

With reference to Fig. 8, the DMA storage modulus is shown on a logarithmic scale (Log storage modulus vs sample temperature) for the samples of Table 3 as well as CE1. As is shown in Fig. 8, IE4, IE5, IE6 & IE7 exhibits an improved storage modulus at high temperatures (about 120 °C) compared with CE1. Moreover, as compared to CE1, IE4, IE5, IE6 & IE7 exhibits a lower storage modulus at low temperatures (about 30 °C). Thus, IE4, IE5, IE6 & IE7 exhibit a well-balanced combination of flexibility at lower temperatures and creep resistance at higher temperature. It is also believed the SEBS reduces the sizes of PS microdomains, which results in higher interface area of PS and LDPE (as shown in Example 2 compared with Example 3).

### Example 4

The LDPE was compounded with the PS and the SEBS. The samples were produced by melt compounding at 200 °C, 50 rpm for 6 minutes, using a microcompounder (HAAKE^{™} MiniCTW Micro-Conical Twin Screw Compounder). Peroxide (DCP) was dissolved in methanol, and the compounded LDPE, PS and SEBS were soaked with the peroxide-solution with different concentration of DCP (1 or 2 wt%). The soaked samples were dried at 70 °C in an oven overnight and the hot-pressed at 180 °C and 200 bar, forming crosslinked samples, i.e. containing XLPE, PS and SEBS. A sample containing only XLPE being crosslinked LDPE (LD 101BA from ExxonMobil) with 1 wt% DCP and a sample containing only XLPE being crosslinked LDPE (LD 101BA from ExxonMobil) with 2 wt% DCP were also prepared via above-mentioned soaking and hot-press processes.

The various samples are summarized in Table 4 below.

**Table 4. Compositions of the various samples in Example 4.**

| | CE7 | CE8 | IE8 | IE9 | IE10 |
|---|---|---|---|---|---|
| | XLPE 1 (LDPE 1% DCP) | XLPE 2 (LDPE 2% DCP) | SEBS:PS: LDPE:DCP (5:5:89:1) | SEBS:PS: LDPE:DCP (5:10:84:1) | SEBS:PS: LDPE:DCP (5:30:64:1) |
| SEBS wt% | 0 | 0 | 5 | 5 | 5 |
| PS wt% | 0 | 0 | 5 | 10 | 30 |
| LDPE wt% | 99 | 98 | 89 | 84 | 64 |
| DCP wt% | 1 | 2 | 1 | 1 | 1 |

| | | | | | |
|---|---|---|---|---|---|
| CE: Comparative Example; IE: Inventive Example | | | | | |

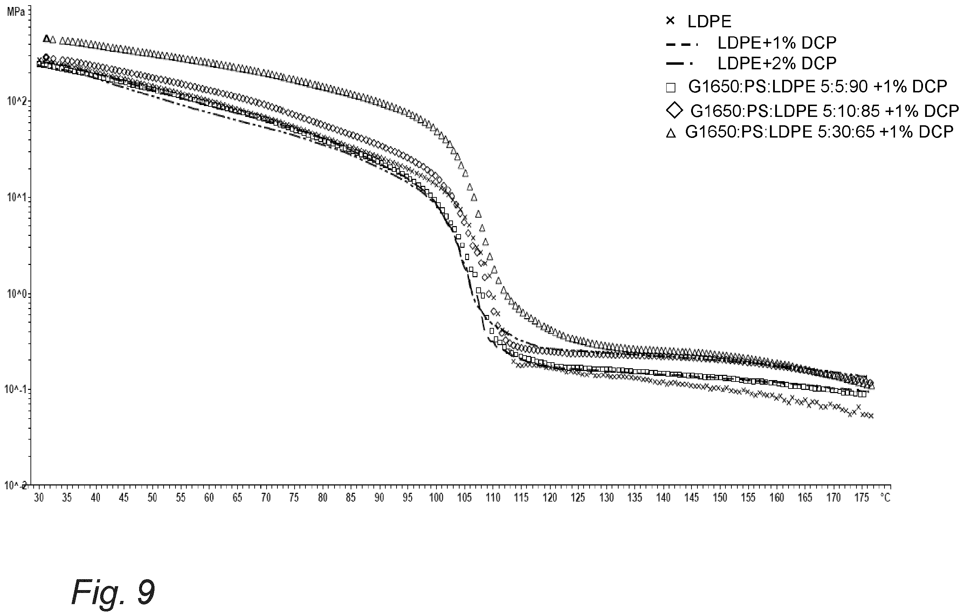

With reference to Fig. 9, the DMA storage modulus is shown on a logarithmic scale (Log storage modulus vs sample temperature) for the samples of Table 3 as well as CE1. As is shown in Fig. 9, IE8, IE9 & IE10 exhibits an improved storage modulus at high temperatures (about 120 °C) compared with CE1. Moreover, as compared to CE1, IE8, IE9 & IE10 exhibits a similar storage modulus at low temperatures (about 30 °C). Thus, IE4, IE5, IE6 & IE7 exhibit a well-balanced combination of flexibility at lower temperatures and creep resistance at higher temperature.

Furthermore, as is shown in Fig 9, IE9 & IE10, exhibits an improved storage modulus at high temperatures (about 120 °C) over CE7 as well as CE8, i.e. for the same amount of DCP (1 wt%) an improved insulation was provided over the comparative example crosslinked with a higher amount of DCP (2 wt%).

Thus, by the addition of the PS and SEBS to the XLPE (LDPE and DCP), less crosslinking agent, such as peroxide or DCP, may be used for achieving corresponding material properties, here related to the storage modulus at high temperatures, as compared to CE7 and CE8. It is believed that the PS forms an additional physical network within the XLPE as well as that the SEBS reduces the sizes of PS microdomains, which results in higher interface area of PS and LDPE. These effects which contributes to the advantageously high storage modulus at high temperatures, and the lower amount of DCP needed.

### Methodology

The above DMA Storage modulus were performed according to the method as described in the following.

Storage modulus was measured using Dynamic Mechanical Analysis (DMA). The samples were hot-pressed (180 °C, 200 bar) to a thickness of 1 mm and the samples were then cut to pieces with length and width dimensions of 10x8 mm. DMA was carried out using a DMA1 from METTLER TOLEDO in tensile mode . A temperature sweep was conducted using a frequency of 1 Hz and oscillation displacement of 10 µm with a temperature ramp of 30 °C to 180 °C (1 °C/min).

The storage modulus at 30 and 120 °C were used as stiffness indicators. A lower storage modulus, i.e. stiffness, at low temperature (about 30 °C) is an indicator of higher flexibility. A higher storage modulus, i.e. stiffness, at high temperature (about 120 °C), is an indicator of a higher creep-resistant behaviour and/or high temperature integrity.

The DMA storage modulus may alternative be performed by ISO 6721-1 or ASTM D4065,

Any standard or qualifications mentioned in the present application are to be based on instructions valid on the date of priority of the present application.

The inventive concept has mainly been described above with reference to a few examples. However, as is readily appreciated by a person skilled in the art, other embodiments than the ones disclosed above are equally possible within the scope of the inventive concept, as defined by the appended claims. For example, in case the power cable comprises several identical power cores to form a multi-core power cable, such as three-phase power cable, each power core may correspond to that described with reference to the power cable described in Figs. 1 and 2 or in Figs. 3 and 4. Thus, each power core may at least comprise a conductor 2,102 and an insulation system 5,105 as previously described. The power cores may be stranded and surrounded by a polymeric jacket 11,111.

## Claims

1. A power cable (1) comprising:
- a conductor (2) extending along a centre axis (C);
- an insulation system (5) including at least a first semiconducting layer (3) surrounding the conductor (2), and an insulation layer (4) surrounding the first semiconducting layer (3);
wherein the insulation layer (4) comprises:
a) 40-94 wt% LDPE; and
b) 6-60 wt% PS and/or styrene block copolymer,
wherein the weight percentages are based on the insulation layer (4) as a whole.

2. The power cable (1) of claim 1, wherein the insulation layer (4) comprises:
a) 40-90 wt% LDPE, such as 40-85 wt% LDPE, such as 40-75 wt% LDPE; and
b) 10-60 wt%, such as 15-60 wt%, such as 25-60 wt% PS and/or styrene block copolymer,
wherein the weight percentages are based on the insulation layer (4) as a whole.

3. The power cable (1) of claim 1 or 2, wherein the insulation layer (4) has been crosslinked, preferably by using peroxide as crosslinking agent.

4. The power cable (1) of claim 3, wherein the insulation layer (4) comprises:
a) 50-94 wt%, such as 50-85 wt%, such as 50-80 wt% XLPE; and
b) 6-50 wt%, such as 15-50 wt%, such as 20-50 wt% PS and/or styrene block copolymer,
wherein the weight percentages are based on the insulation layer (4) as a whole.

5. The power cable (1) of claim 1 or 2, wherein the insulation layer (4) is not crosslinked and comprises:
a) 40-75 wt% LDPE, such as 40-70 wt% LDPE, and
b) 25-60 wt% styrene block copolymer, such as 30-60 wt% styrene block copolymer,
wherein the weight percentages are based on the insulation layer (4) as a whole.

6. The power cable (1) according to any one of the preceding claims, wherein the styrene block copolymer is selected from the group consisting of SEBS, SEPS, SBS or SIS, or a mixture thereof.

7. The power cable (1) according to any one of the preceding claims, wherein the insulation layer (4) is an extruded, such as co-extruded, insulation layer.

8. The power cable (1) according to any one of the preceding claims being a medium voltage or high voltage power cable.

9. The power cable (1) according to any one of the preceding claims, wherein the insulation layer (4) has a storage modulus of between 250 and 550 MPa when measured at 30 °C, such as between 300 and 500 MPa using the DMA Storage modulus method as defined herein.

10. The power cable (1) according to any one of the preceding claims, wherein the insulation layer (4) comprises PS and styrene block copolymer in contents of:
a) 3-50 wt%, such as 10-50 wt%, such as 20-50 wt% PS, such as 25-45 wt% PS, and
b) 3-15 wt% styrene block copolymer
wherein the weight percentages are based on the insulation layer (4) as a whole.

11. The power cable (1) according to any one of the claims 1-9, wherein the insulation layer (4) comprises PS or styrene block copolymer in contents of:
a) 6-50 wt% PS, such as 10-50 wt% PS, such as 15-40 wt% PS, or
b) 25-60 wt% styrene block copolymer, such as 30-60 wt% styrene block copolymer
wherein the weight percentages are based on the insulation layer (4) as a whole.

12. The power cable (1) according to any one of the preceding claims, wherein LDPE as well as the PS and/or the styrene block copolymer constitutes at least 90 wt% of the insulation layer (104), such as at least 95 wt% of the insulation layer (104), such as at least 97 wt% of the insulation layer (104), based on the weight of the insulation layer as a whole.

13. A process for producing a power cable (1) comprising the steps of:
- providing one a conductor (2);
- applying an insulation system (5) surrounding the conductor (2), wherein the insulation system includes at least a first semiconducting layer (3) and an insulation layer (4) surrounding the first semiconducting layer (3);
wherein the insulation layer (4) comprises:
a) 40-94 wt% LDPE; and
b) 6-60 wt% PS and/or styrene block copolymer,
wherein the weight percentages are based on the insulation layer (4) as a whole.

14. The process of claim 13, wherein the insulation system is applied by extrusion, such as co-extrusion.

15. The process of claim 14, wherein the polymer composition is compounded prior to the extrusion, and optionally cross-linked after the extrusion.
